(19) **Europäisches Patentamt**

**European Patent Office**

**Office européen des brevets**

(11) **EP 1 176 550 A1**

(12) **EUROPEAN PATENT APPLICATION**

(43) Date of publication:
**30.01.2002 Bulletin 2002/05**

(51) Int Cl.7: **G06T 1/60**

(21) Application number: **00830534.4**

(22) Date of filing: **27.07.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **STMicroelectronics S.r.l.**
**20041 Agrate Brianza (Milano) (IT)**

(72) Inventors:
• **Ukmar, Riccardo**
  **10010 Samone (TO) (IT)**
• **Peduto, Vittorio**
  **10015 Ivrea (TO) (IT)**

(74) Representative: **Mittler, Enrico**
**c/o Mittler & C. s.r.l., Viale Lombardia, 20**
**20131 Milano (IT)**

(54) **Method for storing data in a memory**

(57)    The present invention refers to a method for storing data in a memory consisting of the following phases: store data in a memory (35) by successive lines until said memory is filled (35); unload the data from said memory (35) by successive columns. Such method is characterized in that those data are stored dynamically in the zone of that emptied memory (10) following that unloading phase, associating an index corresponding to the succession of unloading by column to every address and that said data are unloaded in accordance with said succession of indices.

Fig. 6

**EP 1 176 550 A1**

## Description

The present invention refers to a method for storing data in a memory, in particular graphic data in a memory for printers.

Printers are divided into three basic types: 1) needle; 2) laser; 3) ink jet.

Ink-jet printers are based on particular printing languages and several of these adopt the PCL 3 language (Printer Command Language) according to which the graphic data that have to be printed are sent to the printer in the form of a series of successive lines.

The ink jet printer technology, however, provides for the means for data printing being organized in columns of nozzles, commonly known with the term "heads".

Said heads carry out the printing operation in accordance with the fact that in a first phase said graphic printing data are loaded in the memory buffer of the printer as a succession of lines and a second phase in which said data are then unloaded by successive columns.

At present in order to be able to carry out a printing operation of two or more lines, a buffer called "print buffer" whose dimensions (dimensions = width x height) are in function of the number of nozzles present on the heads and of the maximum printing resolution (that is, the number of printing dots per sq. cm.) is used alternately with another buffer, called "compilation buffer", whose dimensions and resolution are the same as those of the printing buffer.

Thus the combination of the lines and columns inside the printing buffer makes a matrix which contains the data that have to be printed.

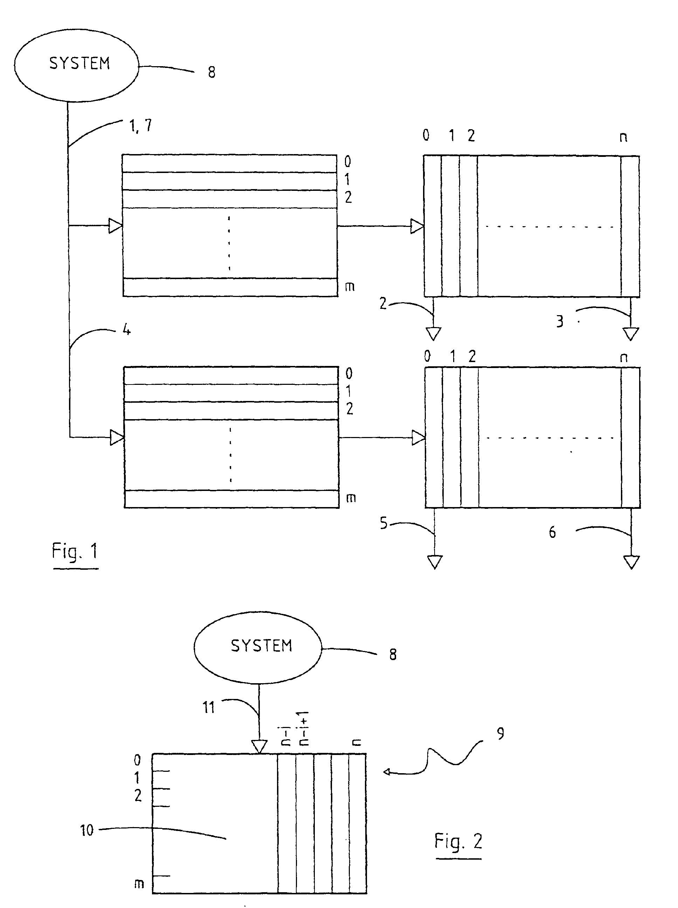

For example, as illustrated in Figure 1, envisaging to load, phase 1, the print buffer by successive lines, numbered from "0" to "m", until the print buffer is completely filled, the printing operation, phase 2, starts from the first column "0" and continues until columns "n" have been finished, phase 3, that is until the print buffer is completely emptied; at the same time column "0" of the print buffer is being emptied, the data are being loaded, phase 4, in successive lines from "0" to "m", in the compilation buffer, and are printed starting from the first column "0", phase 5, proceeding to the final column "n", phase 6 not before all the columns of the print buffer are emptied; in the meantime, phase 7, the data are flowed along successive lines again into the print buffer until it is completely filled again and the printing process is repeated the same when all the columns of the compilation buffer are emptied.

Thus to print a line, preventing the compilation of the successive buffer from starting at the end of the printing operation, that is, avoiding a discontinuity in the flow of print data, the couple consisting of the print buffer and the compilation buffer must be managed alternately.

In view of the state of the art described, the object of the present invention is to carry out the printing operation using only one buffer, that is, to reduce the use of the memory.

According to the present invention, such object is reached through a method for storing data in a memory comprising the following phases: to store data in a memory by successive lines until said memory is filled; to unload data from said memory by successive columns, characterized in that said data are stored dynamically in the zone of said memory which is emptied as a consequence of said unloading phase, associating an index corresponding to the unloading succession by columns to each address and that said data are unloaded according to said succession of indices.

Thanks to the present invention the quantity of memory used can be reduced by half and therefore saving can be made on area and production costs.

In addition, waiting time for the compilation of the stored data is eliminated as the compilation phase starts without having to wait for the previous buffer, that is the print buffer, being completely emptied.

The characteristics and advantages of the present invention will appear evident from the following detailed description of an embodiment thereof, illustrated as non-limiting example in the enclosed drawings, in which:

Figure 1 shows the functional flow chart for an ink jet printer according to the known technique;
Figure 2 shows the concept diagram of the present invention;
Figure 3 shows a block diagram for the calculation of an index in the event the printhead moves from left to right according to the present invention;
Figure 4 shows another block diagram for the calculation of an index in the event the printhead moves from right to left according to the present invention;
Figure 5 shows a further block diagram which describes the printing direction algorithm according to the present invention;
Figure 6 shows a numerical simulation of the functional flow chart of the present invention.

In Figure 2 system 8 is shown which sends graphic print data 11 to a memory buffer 9, structured like a matrix with a physical index for every line crossing, for example in numbers of "m", and for columns, for example in numbers of "n". An index representing a graphic print data is associated to every physical index, that is, to every memory cell.

The configuration assumed by buffer 9, as illustrated, is that in which a portion 10 of buffer 9 is already emptied, while the columns from "n-i" to "n" still have to be unloaded.

The known art, as previously described, provides for waiting until the buffer is completely emptied, that is, provides for waiting until all the graphic print data have left the nth column before being able to fill buffer 9 again; the present invention uses this part of the buffer 10 dynamically to store the successive data that have to be unloaded. The unloading of the graphic print data according to the present invention occurs simultaneously with the allocation of the indices left free.

Thus while the graphic data are being unloaded, one part 10 of the buffer 9 is freed. Nevertheless the indices of this area 10 are not consecutive as the input of the new graphic print data still occurs by successive lines. In addition the printhead is lodged on a carriage (not represented in the Figure) which is bidirectional, that is, the printing of the graphic data stored in buffer 9 occurs both during a translation of the carriage from left to right and from right to left. It is necessary to know which was the last print direction so as not to create discontinuity in the flow of data being unloaded.

It is also necessary, as well, to allocate and therefore calculate a new index for the input of graphic print data, so that the last print direction is not clear to the application and at the same time the discontinuity of the indices is hidden.

To bring this about a virtual buffer must be made available to the print language, which functions as a reference table for assigning the indices of a real buffer. Only the latter is actually existent in the memory and therefore only the latter occupies physical space, with the consequent reduction of memory being occupied.

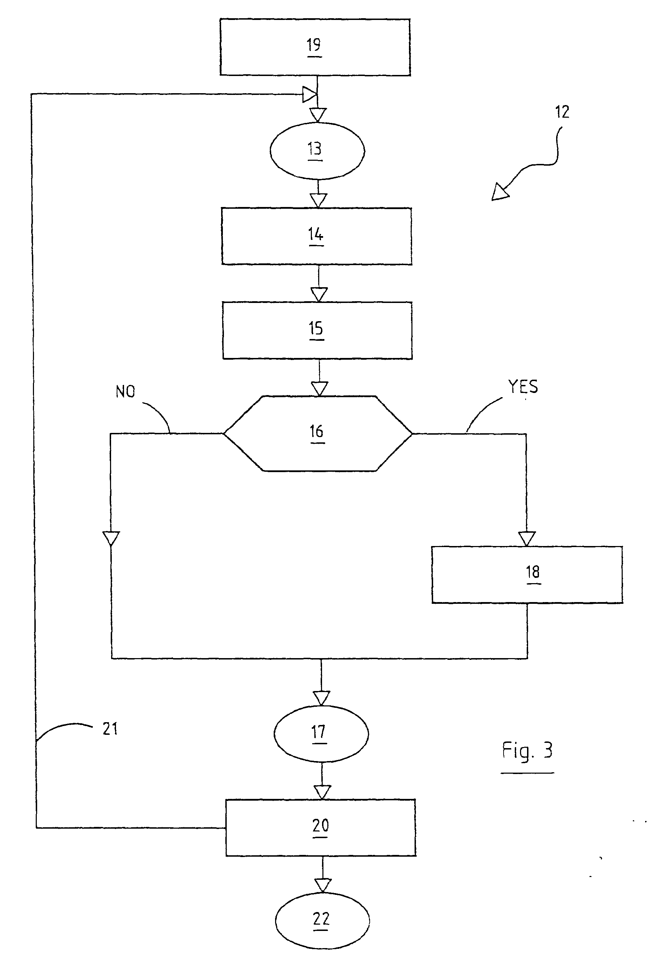

Figure 3 shows a block diagram 12 for the calculation of an index of the real buffer in the event the printhead moves from left to right according to the present invention, and henceforth called algorithm L-R.

In said Figure a first allocation block 19 can be noted in which value 1 is allocated to an OFFSET variable, that is, OFFSET = 1 and a second data insertion block 13, such as for example, a VIRTUAL_INDEX variable, which is the index of the virtual buffer, and a constant SIZE, which is the fixed size, that is size = width x height of the real buffer, in which height is the number of lines and width is the number of columns of said buffer.

OFFSET is the movement all the real buffer indices undergo at the end of the emptying of the real buffer; OFFSET provides the graphic print data with the new position they have to assume upon input into the real buffer, in function of the space of the real buffer which in the meantime has been freed.

The consequence is therefore that VIRTUAL_INDEX is the address of the virtual buffer that functions as a reference table for the indices of the real buffer, so that it is possible to recover the indices of said real buffer following the movement caused by the OFFSET variable.

Block 19 provides for the OFFSET variable always to be assigned a unitary value at the first execution of the printing operation.

A third allocation block 14 in which a DUMMY support variable results as being equal to the product between VIRTUAL_INDEX and OFFSET, the result divided by SIZE, that is:

$$DUMMY = VIRTUAL\_INDEX * OFFSET / SIZE$$

There is successively a fourth allocation block 15 in which the new index of the real buffer is calculated. In fact the REAL_INDEX variable results as being the sum of the value of the quotient of the DUMMY variable plus the value of the rest of the DUMMY variable, where QUOTIENT is a function that restores the result of the division carried out in block 14 and REST is a function that restores the rest of the division carried out in block 14, that is:

$$REAL\_INDEX = QUOTIENT (DUMMY) + REST (DUMMY).$$

Then test 16 is carried out on said REAL_INDEX variable to verify whether it is greater than the SIZE variable, to verify whether the new index is greater than the dimension of the real buffer, that is:

$$REAL\_INDEX > SIZE.$$

In the event test 16 gives a negative result, branch NO, the REAL_INDEX variable contains a new index and said variable is placed in output, block 17; in the event said test 16 gives a positive result, branch YES, another allocation block 18 is carried out, in which that value of the SIZE variable is subtracted from the value of REAL_INDEX calculated in block 15 and one unit is added, that is:

$$REAL\_INDEX = REAL\_INDEX - SIZE + 1.$$

The new value of the REAL_INDEX variable is placed in output through block 17.

In conclusion there is an allocation block 20 in which the new value of the OFFSET variable is calculated at the conclusion of the unloading phase of the graphic print data, that is, the new offset value that the indices of the real buffer have to undergo. Said new value is calculated as the sum of the whole part of the result of the division between OFFSET and HIGH, with HIGH height of the real buffer, and of the division between OFFSET and HIGH multiplied by WIDTH, with WIDTH being width of the real buffer. Take note that HIGH and WIDTH are constant, that is:

$$OFFSET = INT(OFFSET / HIGH) + REST(OFFSET / HIGH) * WIDTH.$$

Said OFFSET variable is carried, by means of line 21, as the new input value into allocation block 13, so as to calculate, in function of the last movement made, which new movement the indices of the real buffer have to undergo.

Diagram 12 terminates with an end block 22.

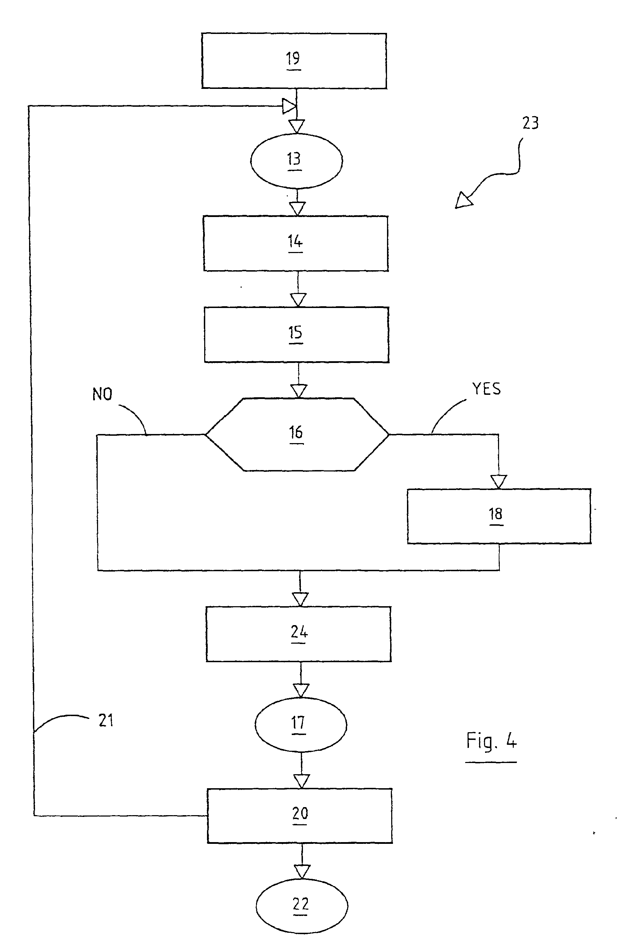

In Figure 4 another block diagram 23 is shown for the calculation of an index in the event the printhead moves from right to left according to the present invention, henceforth called algorithm R-L.

As can be inferred from said Figure algorithm R-L is identical to algorithm L-R except for the presence of a further allocation block 24 in which the value of the REAL_INDEX variable, in the event test 16 gives both a negative or positive result, is calculated subtracting from the value of SIZE the value of the REAL_INDEX variable itself, calculated previously in 15 or in block 18, and a unit, thus keeping in consideration the movement direction of the carriage on which the print head is lodged, that is:

$$REAL\_INDEX = SIZE - 1 - REAL\_INDEX.$$

Therefore the new value of the REAL_INDEX variable is placed in output by means of block 17.

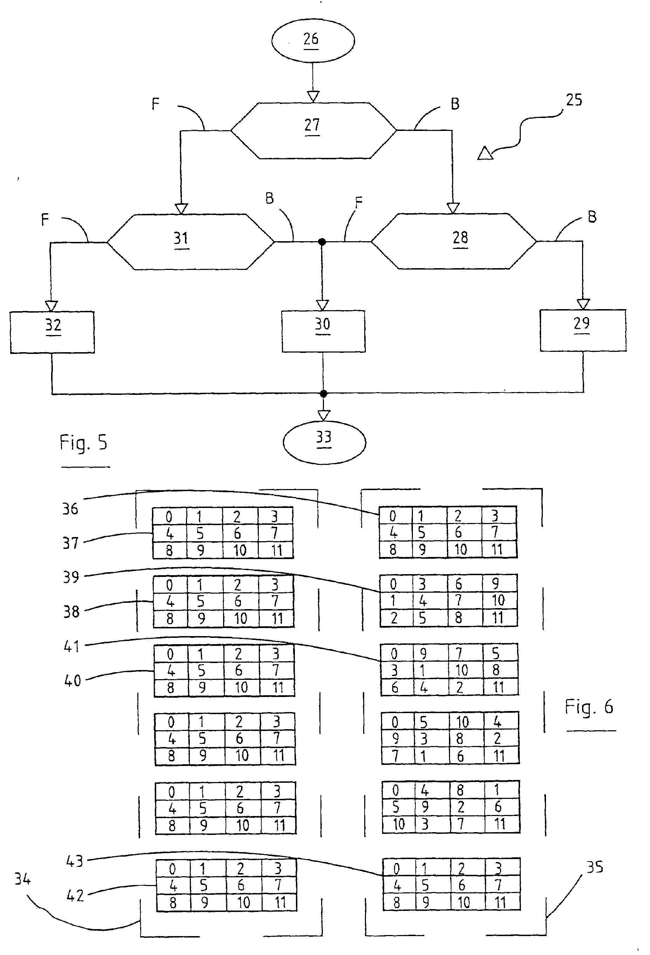

As described previously the diagrams illustrated in Figures 3 and 4 are applied respectively in the event the carriage moves from left to right and in the event the movement is from right to left. In Figure 5 a further block diagram 25 is shown describing the print direction algorithm according to the present invention, and henceforth called algorithm D, so as to know which of the two algorithms L-R or R-L to use.

In said Figure there is a first block 26 which receives two variables DIR and LAST; DIR indicates the direction of the print following that carried out and can thus assume two values, forward F and backward B, while LAST indicates the direction of the last unloading of graphic data from the real buffer and it also can assume two values forward F and backward B.

There is then a test 27 to verify the current value of the DIR variable. In the event it is backward, branch B, another test 28 is carried out to verify the value of the LAST variable. In the event test 28 gives the result backward, branch B, an allocation block 29 is carried out which indicates which algorithm to use and specifically block 29 foresees the use of algorithm L-R shown in Figure 3.

If test 28 gives the result forward, branch F, an allocation block 30 is carried out which indicates the use of algorithm R-L shown in Figure 4.

If test 27 gives the result forward, branch F, another test 31 is carried out on the value of the LAST variable. In the event test 31 gives the result backward, branch B, the allocation block 30 is carried out, similar to test 28 branch F. Allocation block 30 foresees the use of algorithm R-L shown in Figure 4.

If test 31 gives the result forward, branch F, an allocation block 32 is carried out which indicates the use of algorithm L-R shown in Figure 3.

Upon the completion of the respective blocks 29, 30 and 32 there is an end block 33.

By means of algorithm D it is therefore possible to establish in function of the direction of the last unloading of the columns of data, which direction the carriage must take.

A numerical simulation of the functional flow chart of the present invention is shown in Figure 6.

As can be noted from said Figure there is a first column 34 and a second column 35. Said first column 34 represents the virtual buffer, always the same for every transition as it functions as a reference table for said second column 35 which represents the evolution of the buffer actually present in the memory. It can be inferred that both have height H = 3 and width W = 4 giving origin to a constant dimension SIZE = H x W = 12 containing a total of twelve indices.

Supposing that the carriage on which the printhead is lodged moves from left to right and knowing that VIRTUAL_INDEX varies for every pass from zero to eleven, recalculating therefore the algorithm L-R described in Figure 3, we can see that the OFFSET variable initially has a value equal to 1 and therefore all the graphic print data present in the real buffer 36 are left identical to those of the virtual buffer 37.

Then the new OFFSET is calculated through block 20 of algorithm L-R, which provides a value equal to 4, so that the graphic print data are placed starting from the indices that are unloaded first, in this case the first column of virtual buffer 38.

This means that the new index of the real buffer 39 is calculated by means of allocation blocks 15, 16 and 18. In this manner the graphic data are arranged as illustrated in the real buffer 39.

Then the value of the OFFSET variable is calculated again through block 20 of algorithm L-R, which provides a value equal to 5, but the graphic print data that are unloaded first result being those belonging to the first column of the virtual buffer 40 but their position is not consecutive in the real buffer 41, because of the calculation made during the allocation blocks 15, 16 and 18.

In this particular numerical simulation after five passes, the OFFSET variable has again assumed value 1, and therefore buffer 42 coincides with buffer 43, and the cycle starts up again endlessly.

For the calculation of REAL_INDEX adder circuits are used, while for the calculation of OFFSET there is a software implementation.

**Claims**

1. Method for storing data in a memory comprising the followings phases:

    to store data in a memory (35) by successive lines until said memory (35) is filled;
    to unload data from said memory (35) by successive columns;

    **characterized in that** said data are stored dynamically in the zone of said emptied memory (10) following said unloading phase, associating an index corresponding to the unloading succession by column with every address and that said data are unloaded in accordance with said succession of indices.

2. Method for storing data in a memory using a physical memory (35) and a virtual memory (34), both of the matrix type and both having a plurality of indices in function of their sizes (SIZE) with which the respective indices are associated, **characterized by** creating a univocal correspondence between an index of said virtual memory (34) and an index of said physical memory (35) in function of an offset value (OFFSET) by means of the following relation:

    REAL_INDEX = QUOTIENT (VIRTUAL_INDEX * OFFSET / SIZE) + REST (VIRTUAL_INDEX * OFFSET / SIZE)

    in which VIRTUAL_INDEX is the index of said virtual memory (34); REAL_INDEX is the new index of said physical memory (35); SIZE is the size of said physical and virtual memories (34; 35) and is a constant value; OFFSET is the offset value that said index of said physical memory (35) undergoes.

3. Method for storing data using a printer with a bidirectional head according to claim 2, **characterized by** creating an univocal correspondence between an index of said virtual memory (34) and an index of said physical memory (35) in function of an offset value (OFFSET) and of the printing direction from right to left, by means of the following relations:

    REAL_INDEX = QUOTIENT (VIRTUAL_INDEX * OFFSET / SIZE) + REST (VIRTUAL_INDEX * OFFSET / SIZE);

    REAL_INDEX = SIZE- 1 - REAL_INDEX.

4. Method according to claim 2, **characterized in that** the offset value (OFFSET) is calculated by means of the following relation:

    OFFSET = INT (OFFSET /HIGH) + REST (OFFSET /HIGH) * WIDTH

    in which HIGH is the number of lines of said physical memory (35); WIDTH is the number of columns of said physical memory (35).

5. Method according to claim 2, **characterized in that** said REAL_INDEX, in the event it is greater than the value of the size (SIZE) of said physical memory (35), is calculated as per the following formula:

$$REAL\_INDEX = REAL\_INDEX - SIZE + 1.$$

6. Method according to claim 2 using a bidirectional printer,
**characterized in that** it consists of the following succession of phases:

a) to load the size (SIZE) of said physical memory (35);
b) to load the virtual index (VIRTUAL_INDEX) of said virtual memory (34);
c) to calculate the offset value (OFFSET) in accordance with the following relation : OFFSET = INT (OFFSET /HIGH) + REST (OFFSET /HIGH) * WIDTH in which height is the number of lines of said physical memory (35) and width is the number of columns of said physical memory (35);
d) to verify the printing direction (DIR) and which algorithm has been applied (12; 23);
e) to calculate the new real index (REAL_INDEX) of said real memory (35).

7. Method according to claim 6, **characterized in that** said phase (d) provides for the choice of the relation REAL_INDEX = QUOTIENT (VIRTUAL_INDEX * OFFSET / SIZE) + REST (VIRTUAL_INDEX * OFFSET / SIZE) in the event the unloading direction (DIR) is forward (F) and the algorithm previously applied is L-R (12), in the event that the unloading direction (DIR) is backward (B) and the algorithm previously applied is R-L (23).

8. Method according to claim 6, **characterized in that** said phase (d) provides for the choice of the relations REAL_INDEX = QUOTIENT (VIRTUAL_INDEX * OFFSET / SIZE) + REST (VIRTUAL_INDEX * OFFSET / SIZE) and REAL_INDEX = SIZE- 1 - REAL_INDEX in the event the unloading direction (DIR) is forward (F) and the algorithm previously applied is R-L (23), in the event the unloading direction (DIR) is backward (B) and the algorithm previously applied is L-R (12).

9. Method according to claim 6, **characterized in that** said phase (e) provides for the event in which the value of the relation REAL_INDEX = QUOTIENT (VIRTUAL_INDEX * OFFSET / SIZE) + REST (VIRTUAL_INDEX * OFFSET / SIZE) is greater than the size (SIZE) of said physical memory (35) the index previously calculated is defined by REAL_INDEX = REAL_INDEX - SIZE + 1.

Fig. 1

Fig. 2

Fig. 3

Fig. 4

Fig. 5

Fig. 6

**European Patent Office**

**EUROPEAN SEARCH REPORT**

Application Number

EP 00 83 0534

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 497 493 A (AMERICAN TELEPHONE & TELEGRAPH) 5 August 1992 (1992-08-05) * page 2, line 45 - page 5, line 9 * | 1-9 | G06T1/60 |
| A | EP 0 917 094 A (CANON KK) 19 May 1999 (1999-05-19) * column 1, line 57 - column 2, line 22 * | 1-9 | |
| A | US 3 922 643 A (POOLE MARGARET A) 25 November 1975 (1975-11-25) * abstract * | 1-9 | |
| A | WANG H H: "METHOD FOR TRANSPOSING LARGE RECTANGULAR MATRICES" IBM TECHNICAL DISCLOSURE BULLETIN,US,IBM CORP. NEW YORK, vol. 25, no. 3A, 1 August 1982 (1982-08-01), pages 1117-1118, XP000714002 ISSN: 0018-8689 * the whole document * | 1-9 | TECHNICAL FIELDS SEARCHED (Int.Cl.7) |
| A | PATENT ABSTRACTS OF JAPAN vol. 014, no. 170 (E-0913), 30 March 1990 (1990-03-30) & JP 02 026476 A (MATSUSHITA ELECTRIC WORKS LTD), 29 January 1990 (1990-01-29) * abstract * | 1-9 | G06T |

The present search report has been drawn up for all claims

| Place of search | Date of completion of the search | Examiner |
|---|---|---|
| THE HAGUE | 6 November 2000 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 00 83 0534

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2000

| Patent document cited in search report | | Publication date | Patent family member(s) | | Publication date |
|---|---|---|---|---|---|
| EP 0497493 | A | 05-08-1992 | CA | 2058585 C | 25-06-1996 |
| | | | JP | 6223099 A | 12-08-1994 |
| | | | US | 5412740 A | 02-05-1995 |
| EP 0917094 | A | 19-05-1999 | JP | 11138906 A | 25-05-1999 |
| US 3922643 | A | 25-11-1975 | NONE | | |
| JP 02026476 | A | 29-01-1990 | NONE | | |

EPO FORM P0459

For more details about this annex : see Official Journal of the European Patent Office, No. 12/82